# FASCICULE DE BREVET EUROPEEN

(11) **EP 1 910 023 B1**
(45) Date de publication et mention de la délivrance du brevet: **02.09.2009**
(21) Numéro de dépôt: 06780146.4
(22) Date de dépôt: 20.07.2006
(51) Int. Cl.: B23Q 17/20, B23Q 17/22, B24B 3/26

(54) **PROCEDE ET DISPOSITIF DE MESURE DE LA GEOMETRIE D'UNE ARETE DE COUPE A CHANFREINER**
VORRICHTUNG UND VERFAHREN ZUM MESSEN DER GEOMETRIE EINER ABZUSCHRÄGENDEN SCHNEIDKANTE
METHOD AND DEVICE FOR MEASURING THE GEOMETRY OF A CUTTING EDGE TO BE CHAMFERED

(30) Priorité: 25.07.2005 EP 05405454
(43) Date de publication de la demande: 16.04.2008
(73) Titulaire: Rollomatic S.A., 2525 Le Landeron (CH)
(72) Inventeur: FRITSCHY, Patrick, CH-2525 Le Landeron (CH)
(74) Mandataire: Ganguillet, Cyril
(86) Numéro de dépôt international: PCT/IB2006/052488
(87) Numéro de publication internationale: WO 2007/013005

(56) Documents cités:
- US-A- 4 489 522
- US-A- 4 489 523
- US-A1- 2003 053 873

## Description

Les outils de coupe tels que forets, fraises, notamment fraises hémisphériques, certains burins, etc. doivent répondre à des exigences sans cesse accrues en ce qui concerne leurs performances de précision, de qualité de coupe, de vitesse, de durabilité. Dans certains cas, notamment ceux des forets, l'arête de coupe s'étend selon une courbe définie dans l'espace par la jonction de deux surfaces formant entre elles un angle dièdre assez aigu. Ces outils sont en général usinés par meulage sur des machines CNC. Après usinage l'arête de coupe apparaît comme une ligne très effilée de sorte que dès les débuts de l'utilisation le risque d'ébréchure est élevé, ce qui constitue un risque d'usure précoce. D'autre part, l'arête de coupe devenant rapidement irrégulière, cela nuit à la qualité des pièces usinées par ces outils. C'est pourquoi il est usuel de retoucher l'extrémité de l'arête de coupe par meulage d'un chanfrein de protection.

Dans le cas des forets notamment, l'arête de coupe est une courbe gauche de forme complexe. Il est bien entendu possible d'obtenir la forme de cette courbe par le calcul. Toutefois, en pratique sa forme réelle diffère sensiblement de la courbe théorique calculée, notamment en raison des imprécisions des opérations de meulage sur les flancs des filets de l'outil. C'est pourquoi, la forme exacte de cette courbe est en pratique déterminée physiquement juste avant l'opération de chanfreinage. La détermination de la forme de cette courbe s'effectue généralement à l'aide d'un couteau-palpeur relié à un interrupteur et monté sur le support d'entraînement de la meule, près de l'axe de cette dernière. On approche ce couteau de l'arête de l'outil à différents endroits de manière à relever une série de points de contact qui sont enregistrés (en général entre 30 et 50 mesures sont effectuées), après quoi la meule est pilotée en fonction des coordonnées des points relevés de manière à retoucher l'arête de coupe par meulage du chanfrein de protection, opération qu'on appelle chanfreinage de l'arête.

Cette façon de procéder s'est toutefois révélée insatisfaisante par son manque de précision, dû notamment aux erreurs générées par le couteau-palpeur lui-même et son mouvement, ainsi que par les complications qu'elle entraîne.

Un procédé de chanfreinage sans couteau-palpeur est décrit dans le document US 4,489,522 A. Toutefois, le procédé décrit dans ce document antérieur nécessite de tout d'abord chanfreiner une pièce d'essai, qui sert ensuite de référence pour calibrer la position de la meule avec précision, en fonction de la différence entre le résultat espéré et celui obtenu.

### Divulgation de l'invention

Le but de la présente invention est de proposer un procédé plus efficace que les moyens connus jusqu'à maintenant pour obtenir des arêtes de coupe régulières avec un chanfrein de largeur et d'angle déterminés et de qualité durable.

A cet effet, la présente invention concerne un procédé de mesure de la géométrie d'une arête de coupe d'un outil en vue du chanfreinage de cette arête par une opération de meulage commandée automatiquement, procédé comportant la détection et l'enregistrement des positions de points voisins le long de l'arête de manière à permettre une commande programmée des déplacements de la meule le long de la dite arête, caractérisé en ce qu'un détecteur de contact est associé à la meule, en ce que celle-ci, tout en étant en rotation, est d'abord déplacée en direction de l'arête selon des lignes coupant l'arête aux dits points voisins, le détecteur stoppant le mouvement dès que le contact est détecté et les positions atteintes étant enregistrées, et en ce que la dite meule est ensuite commandée selon les enregistrements desdites positions pour effectuer le chanfreinage de l'arête.

La présente invention concerne également un dispositif pour la mise en oeuvre de ce procédé, ce dispositif comportant, sur une machine de meulage CNC équipée pour l'usinage d'arêtes de coupe d'outils, un support de meule avec un détecteur de contact associé et des moyens d'enregistrement et de commande pour effectuer dans une première étape le palpage par la meule en rotation d'une série de points le long d'une arête de coupe de l'outil et l'enregistrement des positions de la meule correspondant aux points de contacts palpés puis dans une seconde étape la commande de la meule de manière à chanfreiner l'arête de coupe en fonction des positions palpées.

La présente invention concerne également un outil, notamment un foret, obtenu avec ledit procédé.

### Brève description des dessins

On décrit ci-après, à titre d'exemple, une forme de mise en oeuvre du procédé pour le chanfreinage de l'arête de coupe d'un foret, en se référant aux dessins annexés dont :
- la fig. 1 est une vue en perspective à grande échelle des parties de coupe de l'extrémité du foret,
- la fig. 2 est une vue en bout de l'extrémité du foret de la fig. 1,
- la fig. 3 est une vue en élévation latérale du foret montrant les positions de points de palpage, et
- la fig. 4 est une vue schématique montrant les éléments essentiels du dispositif d'usinage permettant la mise en oeuvre du procédé.

### Description des modes d'exécution préférés

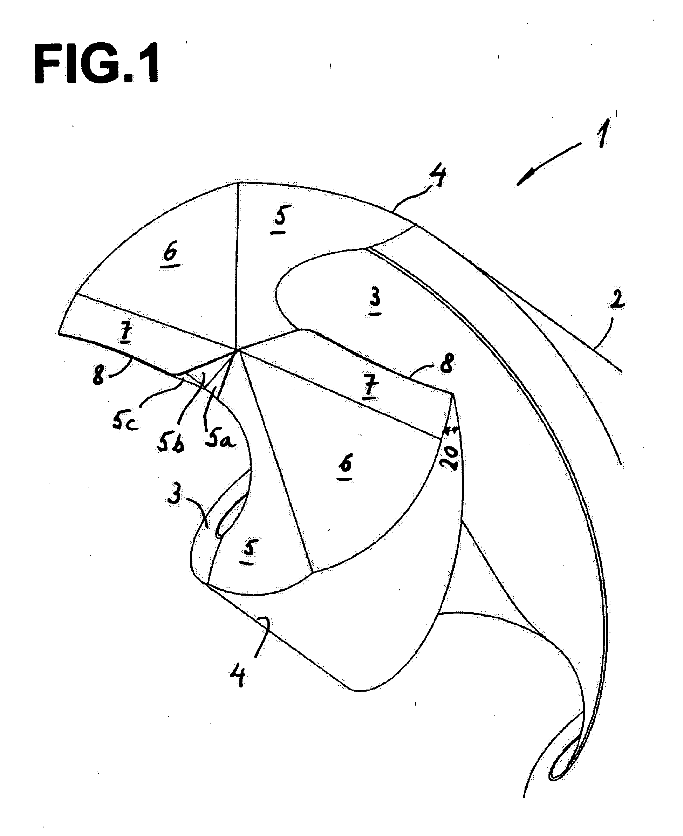

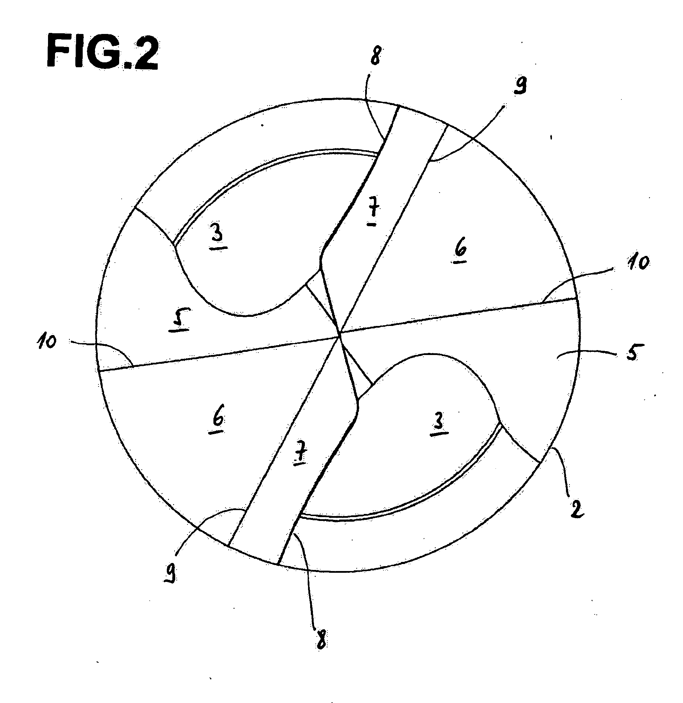

On voit aux fig. 1 et 2 les détails de forme d'un foret 1, destiné par exemple au perçage d'aciers tenaces. Il présente une face latérale cylindrique 2 dans laquelle sont ménagées deux gorges hélicoïdales 3 diamétralement opposées, s'étendant jusqu'à l'extrémité active de l'outil. Ces gorges déterminent entre elles deux filets 4 dont la largeur dans le sens axial est constante jusqu'au voisinage de l'extrémité active de l'outil, mais se réduit par étapes en s'approchant du sommet par la présence de trois rampes successives 5, 6, 7 ménagées sur le flanc arrière des filets 4. La dernière rampe 7 rejoint le flanc antérieur du filet selon une ligne d'arête gauche 8 décrite en détail plus loin. Les inclinaisons et les longueurs des rampes 5, 6, 7 sont déterminées en fonction des performances désirées pour le foret. En fait comme on le voit à la fig. 2, les deux arêtes 9 qui séparent chaque rampe 7 de la rampe 6 adjacente sont rectilignes, diamétralement opposées et déterminent dans le plan diamétral du foret un angle obtus caractéristique de l'outil. Les deux arêtes 10 entre les rampes 5 et 6 sont dans le même cas.

Quant aux arêtes 8 limitant les rampes 7, on voit qu'elles s'étendent selon des lignes dans l'espace 3D à partir du sommet du foret jusqu'au flanc cylindrique 2 en nécessitant la présence de rampes auxiliaires 5a, 5b, 5c entre chaque rampe 5 et la rampe opposée 7. Le tracé de chacune des lignes d'arête 8 est donc complexe. Il résulte de la jonction de surfaces gauches faisant entre elles un angle dièdre 20 aigu, de sorte que ces lignes sont très acérées et présentent un haut risque d'effilochage en service.

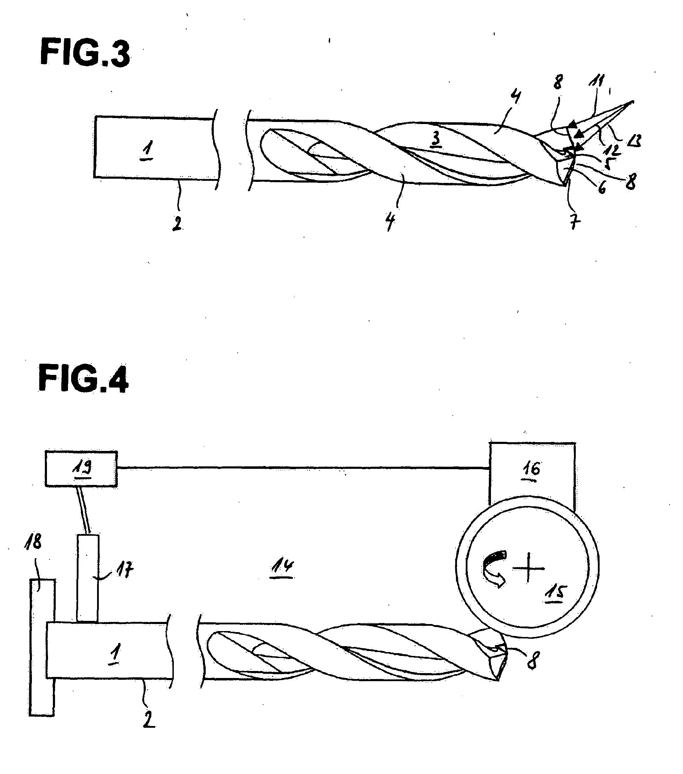

Pour éviter cet inconvénient il est prévu, lors de l'usinage des forets, une opération supplémentaire de chanfreinage des lignes 8 dont une première étape, de palpage, consiste à relever et enregistrer les positions exactes d'un certain nombre de points, par exemple entre trente et cinquante, répartis le long des lignes d'arête 8. Ainsi la fig. 3 indique schématiquement les positions de trois points 11, 12, 13 espacés le long de l'arête 8 et dont les coordonnées sont mesurées et enregistrées.

Cette opération est effectuée sur la machine CNC 14 de meulage des outils en utilisant la meule 15 montée sur son support 16. Un foret 1 avec son arête à chanfreiner est fixé dans le porte-pièce 18 de la machine, dans une position fixe ou susceptible d'être déplacée en rotation. Un détecteur de contact 17, qui dans l'exemple décrit est un détecteur électronique d'ultrasons, est placé dans une position convenable à proximité du foret, après quoi la meule 16 est commandée tout en étant en rotation de manière à s'approcher de la ligne d'arête 8 dans différentes directions comme indiqué à la fig. 3. Dès que le contact a lieu, le détecteur 17 enregistre dans le dispositif électronique 19 la position de la meule et commande le recul de celle-ci. Ainsi le tracé de la courbe 8 dans l'espace est établi et il ne reste plus ensuite qu'à ordonner à la meule de le suivre tel qu'enregistré pour effectuer l'opération de chanfreinage. Une surface terminale très étroite mais régulière est ainsi formée sur l'extrémité de chacun des filets 4. Cette surface s'étend en continu puisqu'elle est réalisée par une opération de meulage commandée numériquement depuis le sommet de l'outil, point de contact des rampes 5, 6, 7, entre les rampes 7 d'une part et les rampes 5b, 5c, et le flanc antérieur du filet 4 déterminé par la gorge 3 d'autre part, jusqu'à la face latérale cylindrique 2 de la tige de l'outil.

La détermination de la forme de l'arête de coupe par palpage à l'aide de la meule en rotation qui effectue elle-même ensuite le chanfreinage est particulièrement avantageuse par rapport à la méthode traditionnelle utilisant un couteau palpeur. En effet, lors du palpage, la meule entre en contact avec l'arête de coupe aux mêmes points que lorsqu'elle va effectuer ensuite le chanfreinage. Ceci élimine les erreurs de calibrage de la machine. De plus, du fait que la meule doit nécessairement déjà être en rotation lors du 1 palpage, le mal rond de la meule est pris en considération.

Les expériences effectuées avec cette méthode ont montré que les forets étaient produits plus rapidement que jusque là, que leur précision et leur durabilité étaient supérieures et que les coûts de production étaient abaissés.

Les mêmes avantages s'obtiennent également avec des forets de différentes dimensions ou avec un plus grand nombre de goujures et avec d'autres types d'outils, comme des fraises, des burins, des alésoirs, etc.

Pour la détection du contact de la meule avec l'arête de coupe, on peut prévoir différents types de détecteurs capables de détecter les vibrations ou ultrasons générés par le contact de la meule en rotation avec l'arête de coupe. Outre le détecteur à ultrasons représenté, des détecteurs piézo-électriques ou à courants de Foucault permettent aussi d'effectuer l'opération de palpage décrite.

## Revendications

1. Procédé de mesure de la géométrie d'une arête de coupe (8) d'un outil en vue du chanfreinage de cette arête par une opération de meulage commandée automatiquement, procédé comportant la détection et l'enregistrement des positions de points (11, 12, 13) voisins le long de l'arête de manière à permettre une commande programmée des déplacements de la meule (15) le long de la dite arête, **caractérisé en ce qu'**un détecteur de contact (17) est associé à la meule, **en ce que** celle-ci, tout en étant en rotation, est d'abord déplacée en direction de l'arête (8) selon des lignes coupant l'arête aux dits points voisins, le détecteur stoppant le mouvement dès que le contact est détecté et les positions atteintes étant enregistrées, et **en ce que** la dite meule (15) est ensuite commandée selon les enregistrements desdites positions pour effectuer le chanfreinage de l'arête.

2. Dispositif pour la mise en oeuvre du procédé selon la revendication 1, **caractérisé en ce qu'**il comporte sur une machine de meulage CNC (14) équipée pour l'usinage d'arêtes de coupe d'outils, un support de meule (16) avec un détecteur de contact (17) associé et des moyens d'enregistrement et de commande (19, 16) pour effectuer dans une première étape le palpage par la meule (15) en rotation d'une série de points le long d'une arête de coupe (8) de l'outil et l'enregistrement des positions de la meule correspondant aux points de contacts palpés puis dans une seconde étape la commande de la meule (15) de manière à chanfreiner l'arête de coupe (8) en fonction des positions palpées.

3. Dispositif selon la revendication 2, **caractérisé en ce que** le détecteur de contact (17) est un détecteur à ultrasons placé à proximité de la tige (1) de l'outil.

4. Dispositif selon la revendication 2, **caractérisé en ce que** le détecteur de contact (17) est un capteur à courant de Foucault.

5. Dispositif selon la revendication 2, **caractérisé en ce que** le détecteur de contact (17) est un capteur piézoélectrique.

## Claims

1. A method of measuring the geometry of a cutting edge (8) of a tool, with a view to bevelling said edge by way of an automatically controlled grinding operation, said method comprising detection and recording of the positions of points (11, 12, 13) adjoining one another along the edge in such a way as to allow programmed control of the movements of the grinding wheel (15) along said edge, **characterised in that** a contact detector (17) is associated with the grinding wheel, **in that** the latter, while rotating, is firstly moved towards the edge (8) in accordance with lines intersecting the edge at said adjoining points, the detector stopping movement once contact is detected and the positions reached being recorded, and **in that** said grinding wheel (15) is then controlled in accordance with said recorded positions to bring about bevelling of the edge.

2. A device for implementing the method according to claim 1,
**characterised in that** it comprises on a CNC grinding machine (14), equipped for machining tool cutting edges, a grinding wheel support (16) with an associated contact detector (17) and recording and control means (19, 16) for bringing about, in a first step, sensing by the rotating grinding wheel (15) of a series of points along a cutting edge (8) of the tool and recording of the positions of the grinding wheel corresponding to the contact points sensed, and then, in a second step, control of the grinding wheel (15) in such a way as to bevel the cutting edge (8) as a function of the sensed positions.

3. A device according to claim 2, **characterised in that** the contact detector (17) is an ultrasonic detector placed close to the shank (1) of the tool.

4. A device according to claim 2, **characterised in that** the contact detector (17) is a Foucault current sensor.

5. A device according to claim 2, **characterised in that** the contact detector (17) is a piezoelectric sensor.

## Patentansprüche

1. Verfahren zum Messen der Geometrie einer Schneidkante (8) eines Werkzeugs im Hinblick auf das Abschrägen dieser Kante durch einen automatisch gesteuerten Schleifvorgang, wobei das Verfahren die Erkennung und Aufzeichnung der Positionen von nahe gelegenen Punkten (11, 12, 13) entlang der Kante umfasst, so dass eine programmierte Steuerung der Verfahrwege der Schleifscheibe (15) entlang dieser Kante ermöglicht wird, **dadurch gekennzeichnet, dass** der Schleifscheibe ein Kontaktdetektor (17) zugeordnet ist, dass diese während des Drehens zunächst in Richtung der Kante (8) nach Linien, die die Kante in den nahe gelegenen Punkten schneiden, bewegt wird, wobei der Detektor die Bewegung stoppt, sobald der Kontakt erkannt wird, und die erreichten Positionen aufgezeichnet werden und dass die Schleifscheibe (15) anschließend zum Abschrägen der Kante gemäß den Aufzeichnungen dieser Positionen gesteuert wird.

2. Vorrichtung zur Umsetzung des Verfahrens nach Anspruch 1, **dadurch gekennzeichnet, dass** sie an einer CNC-Schleifmaschine (14), die zur Bearbeitung von Werkzeugschneidkanten ausgerüstet ist, einen Schleifscheibenhalter (16) mit einem zugeordneten Kontaktdetektor (17) und Mittel zum Aufzeichnen und Steuern (19, 16) umfasst, um in einem ersten Schritt mit der drehenden Schleifscheibe (15) eine Reihe von Punkten entlang einer Schneidkante (8) des Werkzeugs abzutasten und die Positionen der Schleifscheibe entsprechend den abgetasteten Kontaktpunkten aufzuzeichnen und anschließend in einem zweiten Schritt die Schleifscheibe (15) so zu steuern, dass die Schneidkante (8) in Abhängigkeit von den abgetasteten Positionen abgeschrägt wird.

3. Vorrichtung nach Anspruch 2, **dadurch gekennzeichnet, dass** der Kontaktdetektor (17) ein Ultraschalldetektor ist, der in der Nähe der Spindel (1) des Werkzeugs sitzt.

4. Vorrichtung nach Anspruch 2, **dadurch gekennzeichnet, dass** der Kontaktdetektor (17) ein Wirbelstromsensor ist.

5. Vorrichtung nach Anspruch 2, **dadurch gekennzeichnet, dass** der Kontaktdetektor (17) ein piezoelektrischer Sensor ist.
